# EUROPÄISCHE PATENTSCHRIFT

(11) **EP 0 709 252 B1**
(45) Veröffentlichungstag und Bekanntmachung des Hinweises auf die Patenterteilung: **10.06.1998**
(21) Anmeldenummer: 95116620.6
(22) Anmeldetag: 21.10.1995
(51) Int. Cl.: B60R 16/02

(54) **Insbesondere für den Einbau in Kraftfahrzeugkarosserien bestimmter Kabelbaum**
Wire harness for incorporation into a vehicle body
Faisceau de câbles en particulier pour le montage dans une carosserie de voiture

(30) Priorität: 26.10.1994 DE 9417189 U
(43) Veröffentlichungstag der Anmeldung: 01.05.1996
(73) Patentinhaber: Leonische Drahtwerke AG, 90402 Nürnberg (DE)
(72) Erfinder: Reichinger,Gerhard, D-91126 Rednitzhembach (DE)
(74) Vertreter: Tergau, Enno, Dipl.-Ing.

(56) Entgegenhaltungen:
- EP-A- 0 235 924
- EP-A- 0 566 969
- DE-A- 3 609 704
- DE-A- 3 804 086

## Beschreibung

Die Erfindung betrifft einen Kabelbaum, insbesondere für den Einbau in Kraftfahrzeuge. Derartige Kabelbäume bestehen aus einer Vielzahl von Einzelleitungen unterschiedlicher Länge, die in einem Hauptast zusammengefaßt sind, aus dem mehrere Einzelkabel abzweigen. An den Leitungsenden der Einzelkabel sind elektrische Verbindungselemente angeordnet, mit denen der Kabelbaum an Fahrzeugkomponenten, allgemein an elektrische Bauteile, anschließbar ist. Im folgenden wird der Einfachheit halber bei den elekrischen Verbindungselementen von Steckern und bei den mit ihnen zu verbindenden Gegen-Verbindungselementen von Buchsen gesprochen.

Bei der Montage solcher Kabelbäume kommt es häufig vor, daß mehrere Stecker mit den Buchsen eines Bauelementes oder einer Gruppe von nahe beieinanderliegenden Bauelementen verbunden werden müssen. Dabei besteht die Gefahr von Verwechslungen, insbesondere wenn der Einbauort der elektrischen Bauteile schwer zugänglich ist. Die Verwechselbarkeit kann zwar durch unterschiedlich geformte oder kodierte Stecker verhindert werden. Der Versuch, einen Stecker mit einer falschen Buchse zu verbinden, kostet aber zumindest Montagezeit. Werden bei dem Zusammenkoppeln falscher Teile erhöhte Kräfte aufgewendet, um die noch nicht erkannte Fehlverbindung herzustellen , kann dies zur Beschädigung der Verbindungselemente führen. Zur Lösung dieses Problems ist es bekannt, die Kabelenden mit Schrumpfschläuchen zu überziehen. Durch Hitzeeinwirkung wird das Material der Schrumpfschläuche bis zu einem gewissen Grade fest, wodurch sich die Kabelenden so fixieren lassen, daß die Steckerpositionen den Buchsenpositionen am Bauteil oder an der Gruppe von Bauteilen in etwa entspricht. Eine genaue und stabile Lagefixierung ist dadurch aber nicht möglich. Außerdem ist diese Art der Lagefixierung sehr montageaufwendig. Die Schrumpfschläuche müssen nämlich nicht nur die Einzelkabel, sondern auch den Kabelast umfassen aus dem sie abzweigen. Eine räumliche Fixierung der Stecker zueinander wäre sonst kaum möglich. Eine andere Art der Fixierung besteht darin, daß die Kabelenden mit einem nachträglich angebrachten gemeinsamen Träger, etwa einem Metallband **oder nach DE 38 04 086 A1 mit einem Schutzgehäuse** versehen werden. Auch diese Art der Fixierung ist sehr montageaufwendig. Um eine einigermaßen exakte Positionierung der Steckerpositionen zu gewährleisten, muß sich die Versteifung bzw. Armierung der Einzelkabel bis in den gemeinsamen Ast, aus dem sie abzweigen, hineinerstrecken. Diese Art der Fixierung der Kabelenden ist ebenfalls sehr montageaufwendig.

Davon ausgehend ist es die Aufgabe der Erfindung, einen Kabelbaum vorzuschlagen, bei dem die Stecker in vorgegebenen räumlichen Positionen fixiert sind und bei dem die geschilderten Nachteile umgangen sind. Diese Aufgabe wird durch die Merkmalskombination des Anspruches 1 gelöst. **Der die einer Gruppe von Buchsen bzw. einem Bauteil oder einer Gruppe von Bauteilen zugeordneten Kabelenden in einer den Buchsenpositionen entsprechenden dreidimensionalen Anordnung lagefixierende gemeinsame Träger ist mit der Umhüllung einstückig verbunden, wobei der Träger und die Umhüllung in einem gemeinsamen Spritz- oder Gießvorgang hergestellt sind.** Auf diese Weise kann auf fertigungstechnische sehr einfache Weise ein Kabelbaum erhalten werden, bei dem die Stecker in der in Rede stehenden Art lagefixiert sind. Dazu sind weder separate Versteifungsteile, wie Schrumpfschläuche oder **Schutzgehäuse** notwendig. Der Träger und die Kabelumhüllungen sind vielmehr Teile einer einstückigen Ummantelung des gesamten Kabelbaums. Der Träger kann ganz einfach durch entsprechende Formaushöhlungen in der Spritz- oder Gießform des Kabelbaums erzeugt werden. Im Vergleich zu einer nachträglichen Aussteifung der Kabelenden ist diese Methode wesentlich kostengünstiger. Mit der einmal hergestellten Spritz- oder Gießform kann eine Vielzahl von Kabelbäumen hergestellt werden. Nach Entformen ist der Kabelbaum vollständig fertig. Es muß nicht mehr Hand angelegt werden, um die Kabelendbereiche auszusteifen bzw. die Stecker in einer vorgegebenen relativen Lage zueinander zu fixieren.

Der Träger kann prinzipiell auf sehr unterschiedliche Art und Weise ausgestaltet sein. Erfindungsgemäß wird jedoch vorgeschlagen, daß der Träger aus einzelnen Fixierplatten besteht, die jeweils zwischen zwei benachbarten Kabelenden angeordnet sind und die Kabelenden nach Art von Schwimmhäuten miteinander verbinden. Dadurch ist eine stabile Fixierung der Kabelenden bzw. der Stecker bei nur geringem Materialbedarf gewährleistet. Die Fixierplatten dienen außerdem als Grifflächen und erleichtern die Handhabung.

Die Maßnahme nach Anspruch 3 hat folgenden Vorteil: Die räumliche Positionierung der Stecker setzt eine entsprechende komplementäre Positionierung der Buchsen an dem oder den elektrischen Bauteilen voraus. Eine fertigungsbedingte oder bautypenabhängige Abweichung der Sollposition einer Buchse an einem Bauteil führt dazu, daß zumindest ein Stecker mit der ihm zugeordneten Buchse nicht mehr ohne weiteres zusammenkuppelbar ist. Dies wäre dann möglich, wenn der Stecker noch eine gewisse Bewegungsfreiheit aufweisen würde. Eine solche Bewegungsfreiheit ist dann vorhanden, wenn sich die Fixierplatten nicht bis zu den Steckern erstrecken, sondern wenn zwischen den Steckern und den Fixierplatten ein nicht fixierter Abschnitt der Kabelenden vorhanden ist. Dieser nichtfixierte Kabelabschnitt ist naturgemäß beweglich, so daß gewissermaßen die einzelnen Stecker in einer 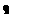 Grobposition" fixiert sind, und noch ein gewisser Spielraum zur Feinpositionierung vorhanden ist. Die genannten fertigungs- oder bautypenabhängigen Abweichungen können daher auf ganz einfache Weise ausgeglichen werden.

Eine weitere in diese Richtung gehende vorteilhafte Abwandlung des erfindungsgemäßen Kabelbaums besteht darin, daß die zwischen zwei benachbarten Kabelenden angeordneten Fixierplatten in Längsrichtung der Kabelenden durchtrennbar sind.

Eine Anpassungsfähigkeit der genannten Art kann auch erreicht werden, wenn eine zwischen zwei benachbarten Kabelenden angeordnete Fixierplatte als Ganzes von den Kabelenden abtrennbar ist. Ein auf diese Weise frei gewordenes Kabelende weist einen noch größeren Freiheitsgrad auf, als dies bei der oben geschilderten Trennbarkeit eine Fixierplatte in Längsrichtung der Kabelenden der Fall ist. Vorteilhaft kann auch sein, daß an dem frei gewordenen Kabelende kein Fixierplattenrest mehr haftet, der unter Umständen bei beengten Einbauverhältnissen oder im Falle einer Kabeldurchführung stören könnte. Es ist also möglich, bei Abweichung einer Buchse von ihrer Sollage, das ihr zugeordnete Kabelende vom Träger abzulösen. Das Kabelende kann dann relativ zu den anderen, noch fixierten Kabelenden entsprechend der Abweichung der Sollposition der Buchse in eine neue Position gebracht werden. Die Relativlage der übrigen Stecker bzw. Kabelenden zueinander wird dadurch nicht beeinflußt. Vorteilhaft ist die erfindungsgemäße Ausgestaltung des Kabelbaumes auch dann, wenn eine Buchse an unterschiedlichen Positionen des Bauteils, etwa in Anpassung an unterschiedliche Einbau-Gegebenheiten unterschiedlicher Fahrzeugtypen, angeordnet sein kann. Auch dann kann ein Kabelende aus dem Träger herausgelöst und in eine der Buchse entsprechenden Position gebracht werden. Oft ist es auch so, daß an einem Baute mehrere Buchsen zur Auswahl stehen. Auch in diesem Fall kann mit einem erfindungsgemäß ausgestalteten Kabelbaum eine Auswahl vorgenommen werden, indem das entsprechende Kabelende mit seinem Stecker aus dem Träger herausgelöst und in die gewünschte Buchse eingesteckt wird, ohne daß dabei die Relativlage der übrigen Stecker und Kabelenden verändert wird.

Wenn es auf eine erhöhte Stabilität der Fixierung ankommt, ist es vorteilhaft, die Stecker in die Fixierplatten zu integrieren. Das heißt, die Stecker sind dann einstückig mit den Fixierplatten verbunden. Dies kann in vorteilhafter Weise dadurch geschehen, daß die Umhüllung und die Fixierplatten in einem gemeinsamen Spritz- oder Gießvorgang hergestellt werden. Auf diese Weise kann erhebliche Montagezeit eingespart werden, da die Steckergehäuse nicht nachträglich angebracht werden müssen, sondern in einem einzigen Gießvorgang zusammen mit den Kabelumhüllungen und den Fixierplatten hergestellt werden.

Eine weitere Stabilisierung einer durch einen gemeinsamen Träger zusammengefaßten Steckergruppe kann dadurch erreicht werden, daß sich die Fixierplatten in die jeweils von zwei Kabelenden gebildeten Zwickel hineinstrecken.

Um das Gieß- oder Spritzverfahren nicht unnötig zu komplizieren, ist es vorteilhaft, wenn Fixierplatten und Umhüllungen und gegebenenfalls auch die Stecker aus demselben Kunststoffmaterial bestehen. Ein für die in Rede stehenden Kabelbäume besonders geeigneter Kunststoff ist Polyurethan.

Die Erfindung wird nun anhand der in den Figuren dargestellten Ausführungsbeispiele näher erläutert. Es zeigen:
- Fig. 1: eine perspektivische Zusammenstellungszeichnung, die ein Ausführungsbeispiel eines erfindungsgemäßen Kabelbaumes im Moment der Montage an ein elektrisches Bauteil zeigt,
- Fig. 2: eine Fig. 1 entsprechende Darstellung mit einer weiteren Ausführungsform eines erfindungsgemäßen Kabelbaums,
- Fig. 3: eine Fig. 1 ensprechende Darstellung mit einer weiteren Ausführungsform eines erfindungsgemäßen Kabelbaumes,
- Fig. 4: eine Draufsicht in Pfeilrichtung IV in Fig. 2,
- Fig. 5: einen Querschnitt längs der Linie V-V in Fig. 1.

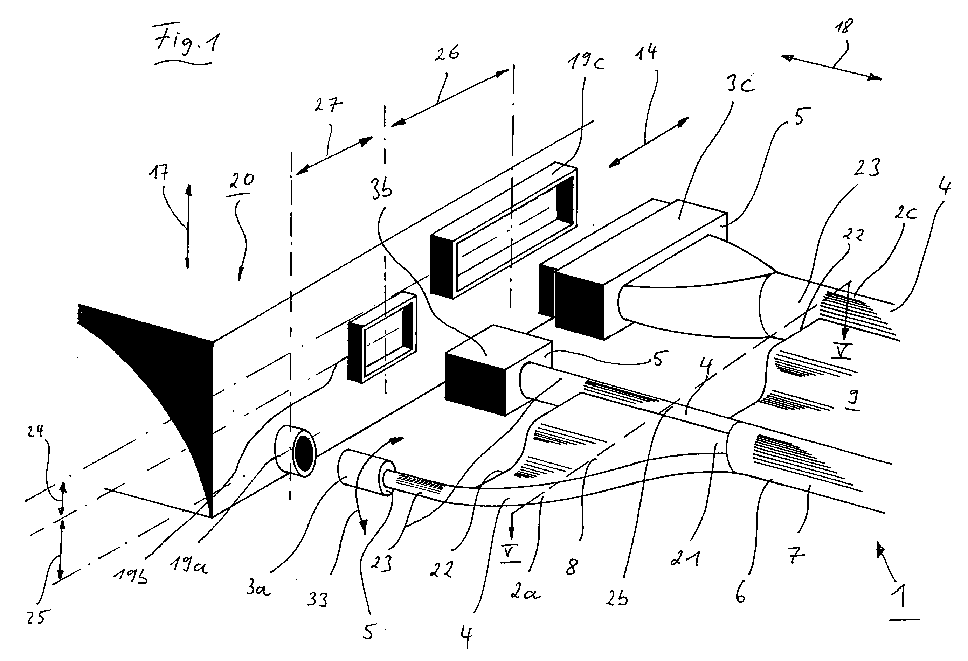

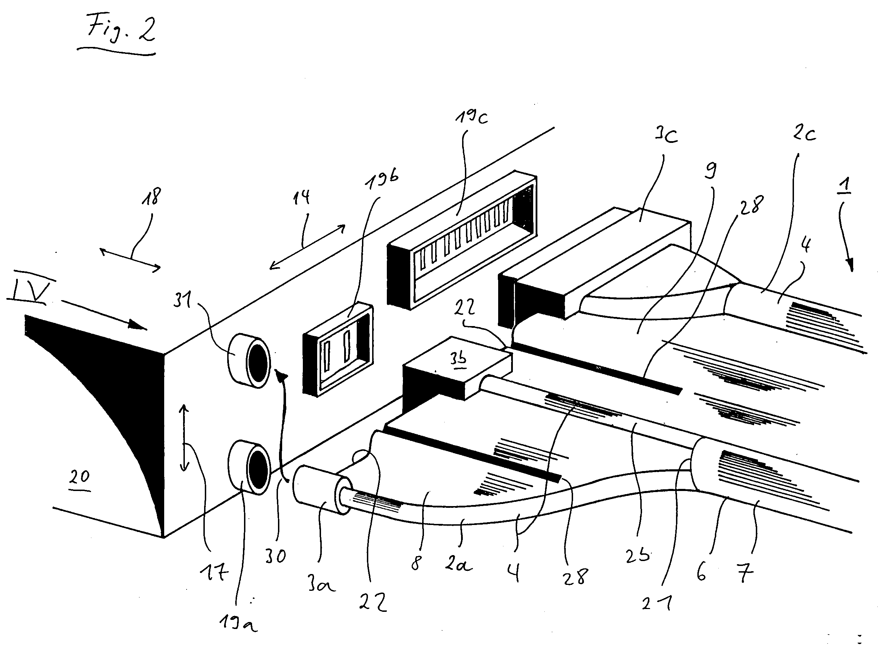

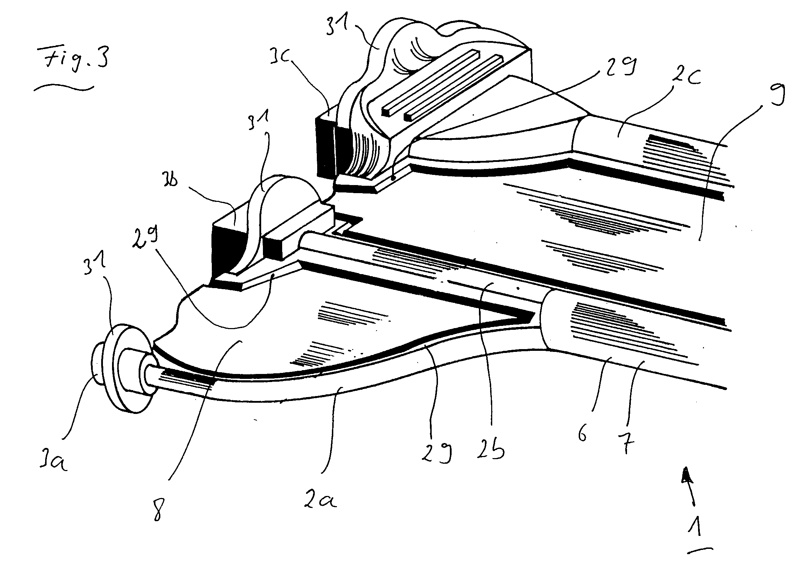

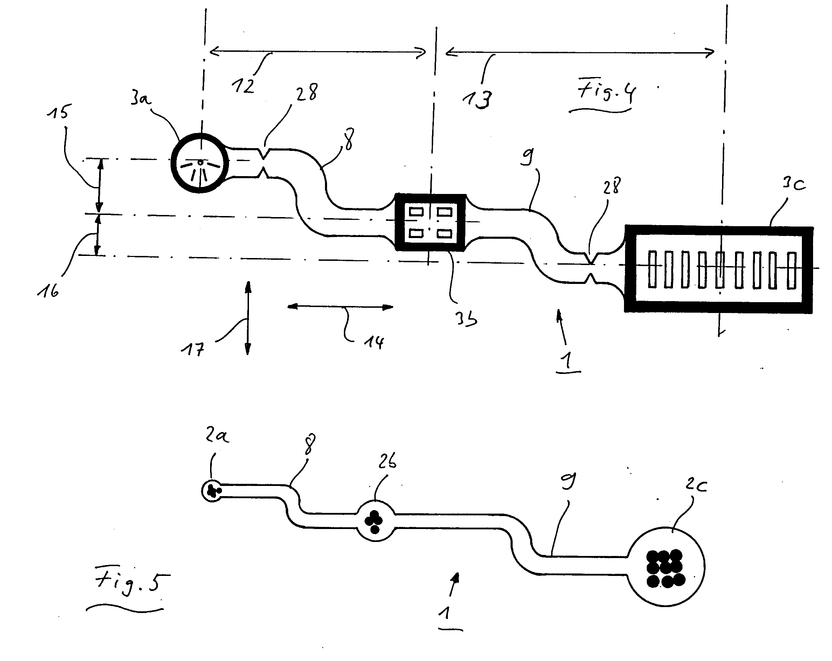

Fig. 1 zeigt einen Ausschnitt eines erfindungsgemäßen Kabelbaumes 1, nämlich die aus einem Hauptast (nicht dargestellt) abzweigenden Kabelenden 2a,2b und 2c mit daran befestigten Steckern 3a,3b,3c. Die Kabelenden sind mit einer Umhüllung 4 umgeben, die bis an die den Kabelenden zugewandten Rückseiten 5 der Stecker heranreicht. Die Umhüllung ist dort stoffschlüssig oder einstückig mit den Gehäusen der Stecker verbunden. Die beiden Kabelenden 2a,2b zweigen aus einem Kabelast 6 ab und sind dort von einer Umhüllung 7 umgeben. Die Umhüllungen 4 und 7 bestehen aus demselben Material und werden bei der Herstellung des Kabelbaums um die Einzelleitungen herumgespritzt oder -gegossen. Eine dreidimensionale räumliche Fixierung der Kabelenden erfolgt durch Fixierplatten 8,9, die in dem Raum zwischen den Kabelenden angeordnet sind und jeweils zwei benachbarte Kabelenden miteinander verbinden. Die Fixierplatten 8,9 sind einstückig mit den Kabelumhüllungen 7 bzw. 4 verbunden. Sie werden durch entsprechende Hohlräume in der Spritz- bzw. Gußform des Kabelbaums bei dessen Herstellung erzeugt. Die Fixierplatten 8,9 sind etwa nach Art von Schwimmhäuten ausgebildet. Wie insbesondere aus Fig. 4 hervorgeht, sind die Fixierplatten 8,9 nicht plan ausgebildet, sondern räumlich gekrümmt, so daß die Kabelenden 2a,2b,2c und die an ihnen befestigten Stecker 3a,3b,3c sowohl einen vordefinierten Abstand 12,13 in der quer zur Längsrichtung der Kabelenden verlaufenden Raumrichtung 14 als auch vordefinierte Abstände 15,16 in der zur Raumrichtung 14 rechtwinklig verlaufenden Raumrichtung 17 aufweisen (Fig.4). Bei den hier vorliegenden Ausführungsbeispielen enden die Stecker alle in einer gemeinsamen Planebene. Eine Varierung der Position eines Steckers in der rechtwinklig zu dieser Planebene verlaufenden Raumrichtung 18 kann dadurch erfolgen, daß die einzelnen Kabelenden unterschiedliche Längen aufweisen.

In den Fig. 1 und 2 ist eine Situation dargestellt, bei der eine Gruppe von Steckern 3a,3b,3c einer ihnen zugeordneten Gruppe von Buchsen 19a, 19b, 19c gegenübersteht, die sich an einem elektrischen Bauteil 20 befinden. Die Abstände 24,25 und 26,27 der Buchsen in Raumrichtung 17 bzw. 14 sind genauso groß wie die entsprechenden Abstände 12,13 und 15,16 zwischen den Steckern 3a,3b,3c.

Die Fixierplatte 8 erstreckt sich bis in den durch die aus dem Kabelast 6 abzweigenden Kabelenden gebildeten Zwickel 21 hinein. Dies ist in entsprechender Art und Weise auch bei der Fixierplatte 9 der Fall (nicht dargestellt). Der dem Zwickel 21 abgewandte Vorderrand 22 der Fixierplatten 8,9 endet mit Abstand vor den Steckern 3a,3b,3c. Zwischen den Steckern und dem Vorderrand 22 ist daher ein nicht fixierter Abschnitt 23 der Kabelenden angeordnet. Dieser Abschnitt ist flexibel, wodurch die Stecker 3a,3b,3c zur Anpassung an Positionsabweichungen der Buchsen 19,a,19b,19c, etwa in Richtung des Doppelpfeiles 33 schwenkbar sind.

Bei dem in Fig. 2 dargestellten Ausführungsbeispiel erstrecken sich die Fixierplatten 8,9 weiter nach vorne und fixieren gleichzeitig auch die Stecker 3a,3b,3c. Diese zusätzliche Fixierung kann bei sehr schweren Steckern vorteilhaft sein. Um dennoch eine Anpassungsfähigkeit an bauliche Gegebenheiten oder Positionsabweichungen der Buchsen 19 zu erreichen, weisen die Fixierplatten 8,9 eine Einkerbung 28 auf. Die Einkerbung 28 erstreckt sich vom Vorderrand 22 der Fixierplatten 8,9 in Längsrichtung der Kabelenden bzw. in Raumrichtung 18. Die Einkerbung 28 ist auch in Fig. 4 deutlich erkennbar. Diese Einkerbungen haben folgenden Zweck: Es kann vorkommen, daß bei unterschiedlichen Typen eines ansonsten baugleichen elektrischen Bauteils 20 mehrere Einsteckmöglichkeiten für einen Stecker vorhanden sind. In diesem, in Fig. 2 dargestellten Fall kann die Fixierplatte entlang der Einkerbungen 28 auseinandergetrennt werden. Dadurch wird das Kabelende 2a frei. Die Lage des Steckers 3a kann dann verändert werden. In Fig. 2 ist dies durch den Pfeil 30 angedeutet. Durch eine Verschwenkung des Kabelendes 2a in diese Richtung kann der Stecker 3a mit einer alternativen Buchse 32 verbunden werden. Die relative Anordnung der beiden anderen Stecker 3b und 3c bleibt von dieser Manipulation unberührt. Es ist auch denkbar, daß sowohl die Fixierplatte 8 als auch die Fixierplatte 9 entlang ihrer Enkerbung 28 getrennt werden. Die einzelnen Kabelenden sind dann praktisch beliebig schwenk- und positionierbar und können, in gewissen Grenzen, in beliebiger Position an einem Bauteil angeordnet werden. Dies ist insbesondere dann von Vorteil, wenn ein für eine bestimmte Buchsenanordnung eines elektrischen Bauteils vorgesehener Kabelbaum für eine Ausführungsform eines elektrischen Bauteils verwendet werden soll, die z.B. aufgrund einer Konstruktionsänderung, etwa bedingt durch die Anpassung an veränderte Einbauverhältnisse eines modifizierten Fahrzeugtyps, eine andere Buchsenanordnung aufweist, als dies den ursprünglichen Steckerpositionen entspricht.

Bei der in Fig. 3 dargestellten Ausführungsform sind die Fixierplatten 8,9 als Ganzes heraustrennbar. Die Einkerbung 29 verläuft hier dementsprechend an der Berührungslinie zwischen Fixierplatte 8,9 und den Kabelenden bzw. den Steckern. Die Bewegungsfreiheit der auf diese Weise freigewordenen Kabelenden ist bei dieser Ausführungsform gegenüber jener gemäß Fig. 2 erhöht, da keine evtl. störenden Fixierplattenhälften an den Kabelenden haften. Um das Heraustrennen der Fixierplatten zu erleichtern, kann an deren Ober- oder Unterseite eine Grifflasche, eine Ziehschlaufe etc. angeformt sein. Es ist auch denkbar, daß an einer zusammengehörigen Gruppe von Steckern sowohl Fixierplatten mit Längkerbung 28 als auch Fixierplatten mit einer Einkerbung 29 gem. Fig.3 vorhanden sind. Fig. 3 zeigt ein Ausführungsbeispiel eines erfindungsgemäßen Kabelbaumes, bei dem die Stecker 3a,3b,3c Einsteckhilfen aufweisen. Diese bestehen darin, daß an der Außenumfangsfläche der Stecker Griffkörper 31 angeformt sind. Die Griffkörper 31 bestehen vorzugsweise aus demselben Material wie die Kabelumhüllungen. Durch die Griffkörper 31 ist die zum Anfassen des Steckers zur Verfügung stehende Fläche vergrößert, was insbesondere bei sehr kleinen Steckern von Vorteil ist. Das Zusammenkuppeln von Stecker und Buchse wird erleichtert, da eine größere Griffläche zur Verfügung steht und die Griffkörper zusätzlich als Angriffsflächen beim Einstecken eines Steckers in eine Buchse dienen.

Als Material für die Kabelbaum-Umhüllung, die Fixierplatten 8,9, die Stecker und die Griffkörper 31 wird vorzugsweise PUR, also Polyurethan, verwendet. Die Einstückigkeit bzw. die integrale Bauweise des gesamten Kabelbaums ist in Fig. 4 und 5 deutlich zu erkennen.

### Bezugszeichenliste

- 1: Kabelbaum
- 2a: Kabelende
- 2b: Kabelende
- 2c: Kabelende
- 3a: Stecker
- 3b: Stecker
- 3c: Stecker
- 4: Umhüllung
- 5: Rückseite
- 6: Kabelast
- 7: Umhüllung
- 8: Fixierplatte
- 9: Fixierplatte
- 12: Abstand
- 13: Abstand
- 14: Raumrichtung
- 15: Abstand
- 16: Abstand
- 17: Raumrichtung
- 18: Raumrichtung
- 19a: Buchse
- 19b: Buchse
- 19c: Buchse
- 20: Elektrisches Bauteil
- 21: Zwickel
- 22: Vorderrand
- 23: Abschnitt
- 24: Abstand
- 25: Abstand
- 26: Abstand
- 27: Abstand
- 28: Einkerbung
- 29: Einkerbung
- 30: Pfeil
- 31: Griffkörper
- 32: Buchse
- 33: Doppelpfeil

## Patentansprüche

1. Kabelbaum (1) insbesondere zum Einbau in Kraftfahrzeuge, mit einem Hauptast und mehreren davon abzweigenden Einzelkabeln, an deren Kabelenden (2a,2b,2c) Verbindungselemente, insbesondere Stecker (3a,3b,3c) zur elektrischen Verbindung mit Gegen-Verbindungselementen, insbesondere Buchsen (19a,19b,19c), angeordnet sind, wobei Hauptast, Einzelkabel und Kabelenden von einer Kunststoff-Umhüllung (4,7) umgeben und wobei die einer Gruppe von Buchsen zugeordneten Kabelenden (2a,2b,2c) an einem gemeinsamen Träger in einer den Buchsenpositionen entsprechenden dreimensionalen Anordnung lagefixiert sind,
dadurch gekennzeichnet, daß der gemeinsame Träger mit der Umhüllung einstückig verbunden ist und Träger und Umhüllung in einem gemeinsamen Spritz- oder Gießvorgang hergestellt sind.

2. Kabelbaum nach Anspruch 1,
dadurch gekennzeichnet, daß der Träger aus einzelnen Fixierplatten (8,9) besteht, die jeweils zwischen zwei benachbarten Kabelenden (2a,2b,2c) angeordnet sind und die Kabelenden nach Art von Schwimmhäuten miteinander verbinden.

3. Kabelbaum nach Anspruch 2,
dadurch gekennzeichnet, daß zwischen den Steckern (3a,3b,3c) und den Fixierplatten (8,9) ein nicht fixierter Kabelabschnitt (23) vorhanden ist.

4. Kabelbaum nach Anspruch 3,
dadurch gekennzeichnet, daß die Fixierplatten (8,9) in Längsrichtung der Kabelenden (2a,2b,2c) durchtrennbar sind.

5. Kabelbaum nach Anspruch 3,
dadurch gekennzeichnet, daß die zwischen zwei benachbarten Kabelenden (2a,2b,2c) angeordnete Fixierplatte (8,9) als Ganzes von den Kabelenden abtrennbar ist.

6. Kabelbaum nach Anspruch 4 oder 5,
dadurch gekennzeichnet, daß die Durchtrennbarkeit bzw. die Heraustrennbarkeit der Fixierplatten (8,9) durch eine entsprechende Einkerbung (28,29) in den Fixierplatten ermöglicht ist.

7. Kabelbaum nach einem der Ansprüche 4-6,
dadurch gekennzeichnet, daß die Stecker (3a, 3b, 3c) einstückig mit den Fixierplatten (8,9) verbunden sind.

8. Kabelbaum nach Anspruch 7,
dadurch gekennzeichnet, daß die Stecker (3a, 3b, 3c), die Umhüllung (4,7) und die Fixierplatten (8,9) in einen gemeinsamen Spritz- oder Gießvorgang hergestellt sind.

9. Kabelbaum nach einem der Ansprüche 1 bis 8,
dadurch gekennzeichnet, daß die Fixierplatte (8,9) und die Umhüllung (4,7) des Kabelbaums (1) aus demselben Kunststoffmaterial bestehen.

10. Kabelbaum nach Anspruch 9,
dadurch gekennzeichnet, daß das Kunststoffmaterial Polyurethan ist.

11. Kabelbaum nach einem der Ansprüche 2 bis 10,
dadurch gekennzeichnet, daß die jeweils zwei Kabelenden miteinander verbindende Fixierplatte (8,9) sich bis in den von den Kabelenden gebildeten Zwickel (21) hinein erstreckt.

## Claims

1. Cable harness (1) in particular for installation in motor vehicles, having a main branch and a plurality of individual cables branching off from it, at whose cable ends (2a,2b,2c) connecting elements, in particular plugs (3a,3b,3c) for electrical connection to mating connecting elements, in particular sockets (19a,19b,19c), are arranged, the main branch, the individual cables and the cable ends being surrounded by a plastic sheath (4,7) and the cable ends (2a,2b,2c) allocated to one group of sockets being fixed in position on a common support in a three-dimensional arrangement corresponding to the socket positions, characterized in that the common support is integrally connected to the sheath, and the support and sheath are produced in a common injection-moulding or casting process.

2. Cable harness according to Claim 1, characterized in that the support is composed of individual fixing spacers (8,9) which are in each case arranged between two adjacent cable ends (2a,2b,2c) and connect the cable ends to one another like webbed feet.

3. Cable harness according to Claim 2, characterized in that, between the plugs (3a,3b,3c) and the fixing spacers (8,9), there is a cable section (23) which is not fixed.

4. Cable harness according to Claim 3, characterized in that the fixing spacers (8,9) can be cut through in the longitudinal direction of the cable ends (2a,2b,2c).

5. Cable harness according to Claim 3, characterized in that the fixing spacer (8,9) which is arranged between two adjacent cable ends (2a,2b,2c) can be cut off the cable ends as an entity.

6. Cable harness according to Claim 4 or 5, characterized in that the capability to cut through the fixing spacers (8,9) or to cut them out is facilitated by an appropriate groove (28,29) in the fixing spacers.

7. Cable harness according to one of Claims 4-6, characterized in that the plugs (3a,3b,3c) are integrally connected to the fixing spacers (8,9).

8. Cable harness according to Claim 7, characterized in that the plugs (3a,3b,3c), the sheath (4,7) and the fixing spacers (8,9) are produced in a common injection-moulding or casting process.

9. Cable harness according to one of Claims 1 to 8, characterized in that the fixing spacer (8,9) and the sheath (4,7) of the cable harness (1) are composed of the same plastic material.

10. Cable harness according to Claim 9, characterized in that the plastic material is polyurethane.

11. Cable harness according to one of Claims 2 to 10, characterized in that the fixing spacer (8,9), which in each case connects two cable ends to one another, extends into the gap (21) formed by the cable ends.

## Revendications

1. Faisceau de câbles (1) en particulier en vue de l'utilisation dans des véhicules automobiles, comportant un tronc principal et plusieurs câbles individuels s'en écartant, aux extrémités de câble desquels (2a, 2b, 2c) sont disposés des éléments de connexion, en particulier des fiches (3a, 3b, 3c) en vue de la connexion électrique avec des éléments de liaison antagonistes, en particulier des bornes (19a, 19b, 19c), le tronc principal, les câbles individuels et les extrémités de câble étant entourés par une enveloppe de matière plastique (4, 7) et les extrémités de câble (2a, 2b, 2c) associées à un groupe de bornes sont fixées en position sur un support commun selon une disposition tridimensionnelle correspondant aux positions des douilles, caractérisé en ce que le support commun fait corps avec l'enveloppe et le support et l'enveloppe sont réalisés au cours d'une opération commune de moulage par injection ou par coulée.

2. Faisceau de câbles selon la revendication 1, caractérisé en ce que le support se compose de plaques de fixation individuelles (8, 9), qui sont disposées respectivement entre deux extrémités de câbles adjacentes (2a, 2b, 2c) et réunissent les extrémités de câble à la manière de revêtements flottants (3).

3. Faisceau de câbles selon la revendication 2, caractérisé en ce qu'entre les fiches (3a, 3b, 3c) et les plaques de fixation (8, 9), se trouve un tronçon de câble (23) non fixé.

4. Faisceau de câbles selon la revendication 3, caractérisé en ce que les plaques de fixation (8, 9) sont séparables dans le sens longitudinal des extrémités de câble (2a, 2b, 2c).

5. Faisceau de câbles selon la revendication 3, caractérisé en ce que la plaque de fixation (8, 9) disposée entre deux extrémités de câble adjacentes (2a, 2, 2c) peut être séparée en totalité des extrémités de câble.

6. Faisceau de câbles selon la revendication 4 ou 5, caractérisé en ce que la séparation des plaques de fixation (8, 9) est rendue possible par une entaille appropriée (28, 29) dans les plaques de fixation.

7. Faisceau de câbles selon l'une quelconque des revendications 4 à 6, caractérisé en ce que les fiches (3a, 3b, 3c) font corps avec les plaques de fixation (8, 9).

8. Faisceau de câbles selon la revendication 7, caractérisé en ce que les fiches (3a, 3b, 3c), l'enveloppe (4, 7) et les plaques de fixation (8, 9) sont réalisées au cours d'une opération commune de moulage par injection ou par coulée.

9. Faisceau de câbles selon l'une quelconque des revendications 1 à 8, caractérisé en ce que la plaque de fixation (8, 9) et l'enveloppe (4, 7) du faisceau de câbles (1) sont constituées de la même matière plastique.

10. Faisceau de câbles selon la revendication 9, caractérisé en ce que la matière plastique est du polyuréthane.

11. Faisceau de câbles selon l'une quelconque des revendications 2 à 10, caractérisé en ce que la plaque de fixation (8, 9), réunissant respectivement deux extrémités de câble, s'étend jusque dans l'angle (21) formé par les extrémités de câble.
